# EUROPÄISCHE PATENTSCHRIFT

(11) **EP 4 529 408 B1**
(45) Veröffentlichungstag und Bekanntmachung des Hinweises auf die Patenterteilung: **29.04.2026**
(21) Anmeldenummer: 23727820.5
(22) Anmeldetag: 15.05.2023
(51) Int. Cl.: A01C 7/06, A01C 21/00, A01C 7/10, A01C 7/20

(54) **AUSBRINGAGGREGAT FUER EINE LANDWIRTSCHAFTLICHE AUSBRINGMASCHINE UND VERFAHREN ZUM BETRIEB EINES AUSBRINGAGGREGATS**
APPLICATION UNIT FOR AN AGRICULTURAL APPLICATION MACHINE AND METHOD FOR OPERATING AN APPLICATION UNIT
UNITÉ DE DISTRIBUTION POUR UNE MACHINE DE DISTRIBUTION AGRICOLE ET PROCÉDÉ DE FONCTIONNEMENT D'UNE UNITÉ DE DISTRIBUTION

(30) Priorität: 23.05.2022 DE 102022112842
(43) Veröffentlichungstag der Anmeldung: 02.04.2025
(73) Patentinhaber: Amazonen-Werke H. Dreyer SE & Co. KG, 49205 Hasbergen (DE)
(72) Erfinder: ARNOLD, Roland, 27777 Ganderkesee (DE); HENKE, Christian, 30938 Burgwedel (DE); HILBERT, Florenz, 48282 Emsdetten (DE); KOCH, Jens, 29525 Uelzen (DE)
(86) Internationale Anmeldenummer: PCT/EP2023/062892
(87) Internationale Veröffentlichungsnummer: WO 2023/227398

(56) Entgegenhaltungen:
- EP-A1- 3 357 317
- DE-A1- 102019 128 003
- US-A1- 2015 230 391
- US-A1- 2021 235 611

## Beschreibung

Die Erfindung betrifft ein Ausbringaggregat für eine landwirtschaftliche Ausbringmaschine nach dem Oberbegriff des Patentanspruchs 1 und ein Verfahren zum Betreiben eines Ausbringaggregats nach dem Oberbegriff des Patentanspruchs 13.

Derartige Ausbringaggregate sind in EP 3 357 317 A1 und DE 10 2019 128003 A1 offenbart.

Ausbringaggregate von landwirtschaftlichen Ausbringmaschinen können zur kombinierten Ablage von Dünger und Saatgut sowohl mit einer Düngerablageeinrichtung als auch mit einer Saatgutablageeinrichtung ausgestattet sein. Die Düngerablageeinrichtung und die Saatgutablageeinrichtung sind dabei üblicherweise an einem gemeinsamen Trägermechanismus befestigt, wobei der Trägermechanismus bauartbedingt eine Veränderung der Lagebeziehung zwischen der Düngerablageeinrichtung und der Saatgutablageeinrichtung erlaubt.

Aus der Druckschrift US 2015/0230391 A1 ist beispielsweise ein Ausbringaggregat mit einer Düngerablageeinrichtung zum Ablegen von Dünger und einer Saatgutablageeinrichtung zum Ablegen von Saatkörnern bekannt, wobei die Höhendifferenz zwischen der Düngerablageeinrichtung und der Saatgutablageeinrichtung festgestellt werden kann, um eine möglichst einheitliche und angestrebte Sätiefe zu erreichen.

Die Druckschrift DE 10 2010 015 166 B4 offenbart eine Winkelverstellung für eine Saatgutabgabeleitung, wobei die Verstellung von der Fahrgeschwindigkeit und Eigenschaften des Saatguts abhängig ist.

In einer Vielzahl von Anwendungsfällen ist es jedoch erforderlich, dass ein spezifischer Längsabstand von Dünger und Saatgut auf der landwirtschaftlichen Nutzfläche eingehalten wird, wobei sich der Längsabstand zwischen dem abgelegten Dünger und dem abgelegten Saatgut durch eine variierende Lagebeziehung zwischen Düngerablageeinrichtung und Saatgutablageeinrichtung verändern kann.

Die der Erfindung zugrundeliegende Aufgabe besteht also darin, bei Ausbringaggregaten mit einem Trägermechanismus, welcher eine Veränderung der Lagebeziehung zwischen der Düngerablageeinrichtung und der Saatgutablageeinrichtung erlaubt, die Einhaltung eines beabsichtigten Längsabstands zwischen dem abgelegten Dünger und dem abgelegten Saatgut auf der landwirtschaftlichen Nutzfläche zu ermöglichen.

Die Aufgabe wird gelöst durch ein Ausbringaggregat mit den Merkmalen des Anspruchs 1, wobei das erfindungsgemäße Ausbringaggregat ein Lageerfassungssystem aufweist, welches dazu eingerichtet ist, eine den Längsabstand des auf der landwirtschaftlichen Nutzfläche abgelegten Düngers und des auf der landwirtschaftlichen Nutzfläche abgelegten Saatguts beeinflussende Lagebeziehung zwischen der Düngerablageeinrichtung und der Saatgutablageeinrichtung sensorgestützt zu erfassen.

Durch die sensorgestützte Erfassung der Lagebeziehung zwischen der Düngerablageeinrichtung und der Saatgutablageeinrichtung kann festgestellt werden, ob der sich aus der Lagebeziehung zwischen der Düngerablageeinrichtung und der Saatgutablageeinrichtung ergebende Längsabstand zwischen dem abgelegten Dünger und dem abgelegten Saatgut innerhalb eines Toleranzbereichs liegt. Wenn der Längsabstand zwischen dem abgelegten Dünger und dem abgelegten Saatgut außerhalb des Toleranzbereichs liegt, sind Maßnahmen erforderlich, über welche der Längsabstand zwischen dem abgelegten Dünger und dem abgelegten Saatgut korrigiert wird. Diese Maßnahmen können beispielsweise eine Positions- und/oder Lageänderung der Düngerablageeinrichtung und/oder der Saatgutablageeinrichtung betreffen. Alternativ oder zusätzlich kann der Betrieb einer Düngerdosiereinrichtung und/oder einer Saatgutdosiereinrichtung des Ausbringaggregats zumindest temporär angepasst werden, sodass beispielsweise der Längsabstand zwischen durch die Saatgutdosiereinrichtung vereinzelten Saatkörnern und durch die Düngerdosiereinrichtung erzeugten Düngerportionen korrigiert wird. Über das Lageerfassungssystem können also Düngerablage und Saatgutanlage aufeinander abgestimmt werden, sodass ein beabsichtigter Längsabstand zwischen dem abgelegten Dünger und dem abgelegten Saatgut eingehalten bzw. insbesondere trotz variierender Lagebeziehung wiederhergestellt wird.

Die Düngerablageeinrichtung kann ein Düngerschar sein. Das Düngerschar kann ein Scheibenschar sein und/oder eine oder mehrere Scharscheiben und/oder eine Düngerablageleitung umfassen

Die Saatgutablageeinrichtung kann ein Säschar sein. Das Säschar kann ein Scheibenschar sein und/oder eine oder mehrere Scharscheiben und/oder eine Saatgutablageleitung umfassen.

In einer bevorzugten Ausführungsform des erfindungsgemäßen Ausbringaggregats weist das Lageerfassungssystem zumindest einen Sensor und eine elektronische Datenverarbeitungseinrichtung auf, wobei die elektronische Datenverarbeitungseinrichtung dazu eingerichtet ist, Sensordaten des Sensors zum Erfassen der Lagebeziehung zwischen der Düngerablageeinrichtung und der Saatgutablageeinrichtung auszuwerten. Die Sensordaten müssen nicht zwangsläufig Abstandsdaten sein. Die Sensordaten können Daten sein, welche die Position und/oder die Ausrichtung der Düngerablageeinrichtung und/oder die Position und/oder die Ausrichtung von mit der Düngerablageeinrichtung verbundenen Teilen, beispielsweise Teilen des Trägermechanismus, betreffen. Die Sensordaten können ferner Daten sein, welche die Position und/oder die Ausrichtung der Saatgutablageeinrichtung und/oder die Position und/oder die Ausrichtung von mit der Saatgutablageeinrichtung verbundenen Teilen, beispielsweise Teilen des Trägermechanismus, betreffen.

Derartige Daten lassen einen Rückschluss auf die Lagebeziehung zwischen der Düngerablageeinrichtung und der Saatgutablageeinrichtung zu und können mittels der Datenverarbeitungseinrichtung diesbezüglich verarbeitet werden.

In einer vorteilhaften Weiterbildung des erfindungsgemäßen Ausbringaggregats weist die Düngerablageeinrichtung eine Düngerabgabeöffnung zum Abgeben von Dünger in Richtung des Bodens der landwirtschaftlichen Nutzfläche auf. Alternativ oder zusätzlich kann die Saatgutablageeinrichtung eine Saatgutabgabeöffnung zum Abgeben von Saatkörnern in Richtung des Bodens der landwirtschaftlichen Nutzfläche aufweisen. Der Trägermechanismus erlaubt vorzugsweise eine Veränderung des Längsabstands zwischen der Düngerabgabeöffnung und der Saatgutabgabeöffnung. Die von dem Lageerfassungssystem sensorgestützt erfassbare Lagebeziehung zwischen der Düngerablageeinrichtung und der Saatgutablageeinrichtung umfasst vorzugsweise den Längsabstand zwischen der Düngerabgabeöffnung und der Saatgutabgabeöffnung. Das Lageerfassungssystem ist vorzugsweise dazu eingerichtet, die Position der Düngerabgabeöffnung und die Position der Saatgutabgabeöffnung und/oder den Längsversatz der Düngerabgabeöffnung und/oder Saatgutabgabeöffnung von einer Ausgangsposition zu ermitteln. Die Düngerabgabeöffnung gibt, insbesondere durch ihre Position, den Abgabezeitpunkt des Düngers vor. Die Saatgutabgabeöffnung gibt, insbesondere durch ihre Position, den Abgabezeitpunkt des Saatguts vor.

In einer weiteren bevorzugten Ausführungsform des erfindungsgemäßen Ausbringaggregats erlaubt der Trägermechanismus eine Veränderung der Ausrichtung der Düngerablageeinrichtung, wobei die von dem Lageerfassungssystem sensorgestützt erfassbare Lagebeziehung zwischen der Düngerablageeinrichtung und der Saatgutablageeinrichtung die Ausrichtung der Düngerablageeinrichtung und/oder die Relativausrichtung von Düngerablageeinrichtung und Saatgutablageeinrichtung umfasst. Alternativ oder zusätzlich erlaubt der Trägermechanismus eine Veränderung der Ausrichtung der Saatgutablageeinrichtung, wobei die von dem Lageerfassungssystem sensorgestützt erfassbare Lagebeziehung zwischen der Düngerablageeinrichtung und der Saatgutablageeinrichtung die Ausrichtung der Saatgutablageeinrichtung und/oder die Relativausrichtung von Saatgutablageeinrichtung und Düngerablageeinrichtung umfasst. Durch eine Neigungsänderung der Düngerablageeinrichtung relativ zum Boden wird die Abgaberichtung des Düngers und somit auch der Längsabstand zwischen dem abgelegten Dünger und dem abgelegten Saatgut verändert. Durch eine Neigungsänderung der Saatgutablageeinrichtung wird die Abgaberichtung des Saatguts und somit auch der Längsabstand zwischen dem abgelegten Dünger und dem abgelegten Saatgut verändert. Über eine Erfassung der Ausrichtung der Düngerablageeinrichtung und/oder der Saatgutablageeinrichtung kann also ermittelt werden, ob der Längsabstand zwischen dem abgelegten Dünger und dem abgelegten Saatgut in einem Toleranzbereich liegt.

Es ist ferner ein erfindungsgemäßes Ausbringaggregat bevorzugt, bei welchem der Trägermechanismus ein Anbauteil aufweist, mittels welchem der Trägermechanismus an einem Aggregateträger, insbesondere einem Querbalken, der Ausbringmaschine befestigbar ist. Der Trägermechanismus umfasst vorzugsweise eine die Saatgutablage beeinflussende Auslenkmechanik, mittels welcher die Saatgutablageeinrichtung, insbesondere zur Verfolgung der Bodenkontur der landwirtschaftlichen Nutzfläche, in Bezug auf das Anbauteil des Trägermechanismus auslenkbar ist. Die Auslenkmechanik kann beispielsweise ein Parallelogrammgestänge sein. Mittels der Auslenkmechanik kann die Saatgutablageeinrichtung in Vertikalrichtung nach oben und unten ausgelenkt werden, sodass auch bei unebenem Gelände mit Kuppen und Senken eine beabsichtigte Ablagetiefe des Saatguts beibehalten werden kann.

In einer anderen bevorzugten Ausführungsform des erfindungsgemäßen Ausbringaggregats ist zumindest ein Sensor des Lageerfassungssystems dazu eingerichtet, einen Auslenkungszustand der die Saatgutablage beeinflussenden Auslenkmechanik zu erfassen. Der Sensor des Lageerfassungssystems kann ein Lagesensor, insbesondere ein Winkelsensor, sein. Der Sensor ist vorzugsweise an der die Saatgutablage beeinflussenden Auslenkmechanik angeordnet. Alternativ kann der Sensor, beispielsweise optisch, die Bodenkontur erfassen, sodass die Auslenkung der Auslenkmechanik berechnet werden kann. Die elektronische Datenverarbeitungseinrichtung ist vorzugsweise dazu eingerichtet, die Lagebeziehung zwischen der Düngerablageeinrichtung und der Saatgutablageeinrichtung auf Grundlage des Auslenkungszustands der die Saatgutablage beeinflussenden Auslenkmechanik zu berechnen. Die elektronische Datenverarbeitungseinrichtung ist vorzugsweise dazu eingerichtet, den Längsabstand zwischen der Düngerabgabeöffnung und der Saatgutabgabeöffnung auf Grundlage des die Saatgutablage beeinflussenden Auslenkungszustands der Auslenkmechanik zu berechnen.

Es ist ferner ein erfindungsgemäßes Ausbringaggregat vorteilhaft, bei welchem der Trägermechanismus eine die Düngerablage beeinflussende Auslenkmechanik umfasst. Mittels der die Düngerablage beeinflussenden Auslenkmechanik ist die Düngerablageeinrichtung, insbesondere zur Verfolgung der Bodenkontur der landwirtschaftlichen Nutzfläche, in Bezug auf das Anbauteil des Trägermechanismus auslenkbar. Die die Düngerablage beeinflussende Auslenkmechanik umfasst vorzugsweise mehrere, beispielsweise zwei, gelenkig miteinander verbundene Lenker, wobei ein Lenker an dem Anbauteil und ein Lenker an der Düngerablageeinrichtung angelenkt ist.

Das erfindungsgemäße Ausbringaggregat wird ferner dadurch vorteilhaft weitergebildet, dass zumindest ein Sensor des Lageerfassungssystems dazu eingerichtet ist, einen Auslenkungszustand der die Düngerablage beeinflussenden Auslenkmechanik zu erfassen. Der Sensor des Lageerfassungssystems kann ein Lagesensor, insbesondere ein Winkelsensor, sein. Der Sensor ist vorzugsweise an der die Düngerablage beeinflussenden Auslenkmechanik angeordnet. Alternativ kann der Sensor, beispielsweise optisch, die Bodenkontur erfassen, sodass die Auslenkung der Auslenkmechanik berechnet werden kann. Die elektronische Verarbeitungseinrichtung ist vorzugsweise dazu eingerichtet, die Lagebeziehung zwischen der Düngerablageeinrichtung und der Saatgutablageeinrichtung auf Grundlage des Auslenkungszustands der die Düngerablage beeinflussenden Auslenkmechanik zu berechnen. Die elektronische Datenverarbeitungseinrichtung ist vorzugsweise dazu eingerichtet, den Längsabstand zwischen der Düngerabgabeöffnung und der Saatgutabgabeöffnung auf Grundlage des die Düngerablage beeinflussenden Auslenkungszustands der Auslenkmechanik zu berechnen.

Ferner ist ein erfindungsgemäßes Ausbringaggregat bevorzugt, bei welchem die die Saatgutablage beeinflussende Auslenkmechanik und die die Düngerablage beeinflussende Auslenkmechanik mechanisch miteinander gekoppelt sind. Die die Saatgutablage beeinflussende Auslenkmechanik und die die Düngerablage beeinflussende Auslenkmechanik sind vorzugsweise über eine Koppelstange miteinander gekoppelt. Die Auslenkung der die Saatgutablage beeinflussenden Auslenkmechanik führt vorzugsweise zu einer Auslenkung der die Düngerablage beeinflussenden Auslenkmechanik. Andersherum kann die Auslenkung der die Düngerablage beeinflussenden Auslenkmechanik zu einer Auslenkung der die Saatgutablage beeinflussenden Auslenkmechanik führen. Vorzugsweise weist die die Düngerablage beeinflussende Auslenkmechanik gegenüber der die Saatgutablage beeinflussenden Auslenkmechanik einen Freilauf auf, so dass eine Auslenkung der die Saatgutablage beeinflussenden Auslenkmechanik zu einer Auslenkung der die Düngerablage beeinflussenden Auslenkmechanik führt aber nicht andersherum.

Die Ablagetiefe des Düngers kann über ein bewegliches Einstellglied des Ausbringaggregats veränderbar sein. Das Einstellglied kann als drehbarer Exzenter ausgebildet sein. Vorzugsweise verbindet das Einstellglied die die Saatgutablage beeinflussende Auslenkmechanik mit der Koppelstange. Über eine Verdrehung des Einstellglieds kann der obere Anlenkpunkt der Koppelstange verändert werden, sodass der Abstand zwischen der Düngerablageeinrichtung und der die Saatgutablage beeinflussenden Auslenkmechanik verändert wird. Über das Einstellglied lassen sich vorzugsweise mehrere Düngerablagetiefen einstellen.

In einer weiteren bevorzugten Ausführungsform des erfindungsgemäßen Ausbringaggregats umfasst die die Düngerablage beeinflussende Auslenkmechanik eine Federung, insbesondere eine Blattfederung. Die Federung kann ein Anbauteil des Trägermechanismus, mittels welchem der Trägermechanismus an einem Aggregateträger, insbesondere einem Querbalken befestigbar ist, mit der Düngerablageeinrichtung verbinden. Die Federung erlaubt vorzugsweise ein Einfedern und/oder Ausfedern der Düngerablageeinrichtung, insbesondere in Vertikalrichtung.

Das erfindungsgemäße Ausbringaggregat wird ferner dadurch vorteilhaft weitergebildet, dass das Lageerfassungssystem dazu eingerichtet ist, einen Laufruhewert zu berechnen, welcher die Laufruhe der Düngerablageeinrichtung charakterisiert, insbesondere auf Grundlage von über einen Zeitraum ermittelten Lageveränderungen der Düngerablageeinrichtung und/oder auf Grundlage von über einen Zeitraum ermittelten Lagebeziehungen zwischen der Düngerablageeinrichtung und der Saatgutablageeinrichtung. Alternativ oder zusätzlich kann das Lageerfassungssystem dazu eingerichtet sein, einen Laufruhewert zu berechnen, welcher die Laufruhe der Saatgutablageeinrichtung charakterisiert, insbesondere auf Grundlage von über einen Zeitraum ermittelten Lageveränderungen der Saatgutablageeinrichtung und/oder auf Grundlage über einen Zeitraum ermittelten Lagebeziehungen zwischen der Düngerablageeinrichtung und der Saatgutablageeinrichtung. Über die jeweiligen Laufruhewerte kann festgestellt werden, ob die Laufruhe der Düngerablageeinrichtung bzw. die Laufruhe der Saatgutablageeinrichtung in einem Toleranzbereich liegen. Wenn die Laufruhe der Düngerablageeinrichtung und/oder die Laufruhe der Saatgutablageeinrichtung außerhalb eines Toleranzbereichs liegen, können Maßnahmen eingeleitet werden, welche zu einer Verbesserung bzw. Steigerung der Laufruhe führen.

Das erfindungsgemäße Ausbringaggregat weist eine Düngerdosiereinrichtung auf, welche dazu eingerichtet ist, den abzulegenden Dünger zu dosieren. Die Düngerdosiereinrichtung ist ein Düngerportionierer, welcher dazu eingerichtet ist, den abzulegenden Dünger zu portionieren, das heißt den abzulegenden Dünger zu Anhäufungen von mehreren Körnern zusammenzuführen, Portionen also, und in einem vorbestimmten Zeitabstand als solche gebündelt abzugeben, so dass ein Abgabetakt entsteht im Gegensatz zur üblichen kontinuierlichen Ablage von Dünger in einem anhaltenden Band. Ferner weist das Ausbringaggregat erfindungsgemäß eine Saatgutdosiereinrichtung auf, welche dazu eingerichtet ist, das abzulegende Saatgut zu dosieren. Die Saatgutdosiereinrichtung ist eine Saatkornvereinzelungseinrichtung, welche dazu eingerichtet ist, das abzulegende Saatgut zu vereinzeln. Vorzugsweise weist das Ausbringaggregat eine Steuerungseinrichtung auf, wobei die Steuerungseinrichtung dazu eingerichtet sein kann, den Betrieb der Düngerdosiereinrichtung in Abhängigkeit der Lagebeziehung zwischen der Düngerablageeinrichtung und der Saatgutablageeinrichtung zu steuern. Alternativ oder zusätzlich kann die Steuerungseinrichtung dazu eingerichtet sein, den Betrieb der Saatgutdosiereinrichtung in Abhängigkeit der Lagebeziehung zwischen der Düngerablageeinrichtung und der Saatgutablageeinrichtung zu steuern. Alternativ oder zusätzlich kann die Steuerungseinrichtung dazu eingerichtet sein, den Betrieb der Düngerdosiereinrichtung und den Betrieb der Saatgutdosiereinrichtung in Abhängigkeit der Lagebeziehung zwischen der Düngerablageeinrichtung und der Saatgutablageeinrichtung aufeinander abzustimmen. Durch das Steuern des Betriebs der Düngerdosiereinrichtung und/oder der Saatgutdosiereinrichtung in Abhängigkeit der Lagebeziehung zwischen der Düngerablageeinrichtung und der Saatgutablageeinrichtung lässt sich eine gewünschte Ablagebeziehung zwischen Dünger und Saatgut auf dem Boden der landwirtschaftlichen Nutzfläche umsetzen, auch wenn die Düngerablageeinrichtung und/oder die Saatgutablageeinrichtung so ausgelenkt wird, dass sich der Längsabstand zwischen der Düngerablageeinrichtung und der Saatgutablageeinrichtung verändert. Hierdurch kann eine synchronisierte Dünger- und Saatgutablage durch aufeinander abgestimmte Abgabezeitpunkte von Dünger und Saatgut auch dann umgesetzt werden, wenn eine Konturanpassung der Düngerablageeinrichtung und/oder der Saatgutablageeinrichtung an den Bodenverlauf erfolgt. Die Düngerdosiereinrichtung kann ein rotatorisch antreibbares Portionierelement, beispielsweise einen Portionierflügel umfassen. Das Steuern des Betriebs der Düngerdosiereinrichtung kann zu einer temporären Drehzahlanpassung, beispielsweise zu einem temporären Beschleunigen oder Abbremsen, am Portionierelement führen, sodass die Bereitstellungsfrequenz der Düngerportionen temporär verändert wird. Die Saatgutdosiereinrichtung kann ein rotatorisch antreibbares Vereinzelungselement, beispielsweise eine Vereinzelungsscheibe umfassen. Das Steuern des Betriebs der Saatgutdosiereinrichtung kann zu einer temporären Drehzahlanpassung, beispielsweise zu einem temporären Beschleunigen oder Abbremsen, am Vereinzelungselement führen, sodass die Bereitstellungsfrequenz von vereinzelten Saatkörnern temporär verändert wird.

In einer anderen bevorzugten Ausführungsform des erfindungsgemäßen Ausbringaggregats umfasst die Düngerablageeinrichtung eine Düngerablageleitung und/oder eine Düngerabgabeöffnung. Alternativ oder zusätzlich umfasst die Saatgutablageeinrichtung eine Saatgutablageleitung und/oder eine Saatgutabgabeöffnung. Die Steuerungseinrichtung kann dazu eingerichtet sein, einen Positionierantrieb zum Ändern der Position der Düngerabgabeöffnung und/oder der Ausrichtung der Düngerablageleitung in Abhängigkeit der Lagebeziehung zwischen der Düngerablageleitung und der Saatgutablageeinrichtung zu steuern. Alternativ oder zusätzlich kann die Steuerungseinrichtung dazu eingerichtet sein, einen Positionierantrieb zum Ändern der Position der Saatgutabgabeöffnung und/oder der Ausrichtung der Saatgutablageleitung in Abhängigkeit der Lagebeziehung zwischen der Düngerablageeinrichtung und der Saatgutablageeinrichtung zu steuern. Der Positionierantrieb kann ein Elektromotor sein. Der Positionierantrieb kann ein Linearmotor sein. Die Steuerungseinrichtung kann dazu eingerichtet sein, in Abhängigkeit der Lagebeziehung zwischen der Düngerablageeinrichtung und der Saatgutablageeinrichtung die Andruckkraft der Düngerablageeinrichtung und/oder der Saatgutablageeinrichtung auf den Boden zu steuern, sodass die Laufruhe verbessert wird.

Die der Erfindung zugrundeliegende Aufgabe wird ferner durch ein Verfahren mit den Merkmalen des Anspruchs 13 gelöst, wobei im Rahmen des erfindungsgemäßen Verfahrens eine veränderte Lagebeziehung zwischen der Düngerablageeinrichtung und der Saatgutablageeinrichtung mittels eines Lageerfassungssystems erfasst wird. Eine Steuerungseinrichtung steuert dann in Abhängigkeit der erfassten Lagebeziehung zwischen der Düngerablageeinrichtung und der Saatgutablageeinrichtung den Betrieb einer Düngerdosiereinrichtung des Ausbringaggregats, welche dazu eingerichtet ist, abzulegenden Dünger zu dosieren. Die von der Steuerungseinrichtung gesteuerte Düngerdosiereinrichtung ist ein Düngerportionierer, welcher dazu eingerichtet ist, abzulegenden Dünger zu portionieren. Alternativ oder zusätzlich steuert die Steuerungseinrichtung in Abhängigkeit der erfassten Lagebeziehung zwischen der Düngerablageeinrichtung und der Saatgutablageeinrichtung den Betrieb einer Saatgutdosiereinrichtung des Ausbringaggregats, welche dazu eingerichtet ist, abzulegendes Saatgut zu dosieren. Die von der Steuerungseinrichtung gesteuerte Saatgutdosiereinrichtung ist eine Saatkornvereinzelungseinrichtung, welche dazu eingerichtet ist, abzulegendes Saatgut zu vereinzeln.

In einer bevorzugten Ausführungsform des erfindungsgemäßen Verfahrens steuert die Steuerungseinrichtung in Abhängigkeit der erfassten Lagebeziehung zwischen der Düngerablageeinrichtung und der Saatgutablageeinrichtung einen Positionsantrieb des Ausbringaggregats zum Ändern der Position einer Düngerabgabeöffnung des Ausbringaggregats und/oder der Ausrichtung der Düngerablageleitung des Ausbringaggregats. Alternativ oder zusätzlich steuert die Steuerungseinrichtung in Abhängigkeit der erfassten Lagebeziehung zwischen der Düngerablageeinrichtung und der Saatgutablageeinrichtung einen Positionierantrieb des Ausbringaggregats zum Ändern der Position einer Saatgutabgabeöffnung des Ausbringaggregats und/oder der Ausrichtung einer Saatgutablageleitung des Ausbringaggregats.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel des erfindungsgemäßen Ausbringaggregats in einer schematischen Seitenansicht;
- Fig. 2: die die Saatgutablage beeinflussende Auslenkmechanik des in der Fig. 1 abgebildeten Ausbringaggregats in einer schematischen Seitenansicht;
- Fig. 3: das in der Fig. 1 abgebildete Ausbringaggregat während des Überfahrens einer Senke in dem Boden der landwirtschaftlichen Nutzfläche;
- Fig. 4: das in der Fig. 1 abgebildete Ausbringaggregat während des Überfahrens einer Kuppe in dem Boden der landwirtschaftlichen Nutzfläche;
- Fig. 5: ein Ausführungsbeispiel des erfindungsgemäßen Ausbringaggregats in einer schematischen Seitenansicht, wobei an der Düngerablageeinrichtung eine erste Ablagetiefe eingestellt ist;
- Fig. 6: das in der Fig. 5 abgebildete Ausbringaggregat in einer schematischen Seitenansicht, wobei an der Düngerablageeinrichtung eine zweite Ablagetiefe eingestellt ist;
- Fig. 7: das in der Fig. 5 abgebildete Ausbringaggregat in einer schematischen Seitenansicht, wobei an der Düngerablageeinrichtung eine dritte Ablagetiefe eingestellt ist;
- Fig. 8: ein weiteres Ausführungsbeispiel des erfindungsgemäßen Ausbringaggregats in einer schematischen Seitenansicht;
- Fig. 9: die die Saatgutablage beeinflussende Auslenkmechanik des in der Fig. 8 abgebildeten Ausbringaggregats in einer schematischen Seitenansicht;
- Fig. 10: das in der Fig. 8 abgebildete Ausbringaggregat während des Überfahrens einer Kuppe in dem Boden der landwirtschaftlichen Nutzfläche; und
- Fig. 11: das in der Fig. 8 abgebildete Ausbringaggregat während des Überfahrens einer Senke in dem Boden der landwirtschaftlichen Nutzfläche.

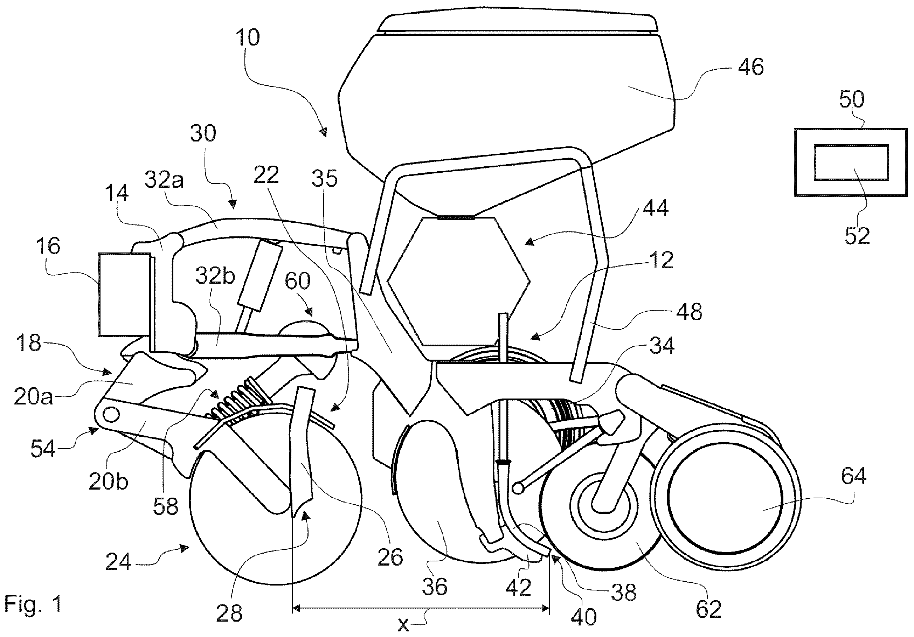

Die Fig. 1 zeigt ein Ausbringaggregat 10 einer landwirtschaftlichen Ausbringmaschine, mit welcher Dünger und Saatgut auf eine landwirtschaftliche Nutzfläche ausgebracht werden kann. Landwirtschaftliche Ausbringmaschinen weisen üblicherweise mehrere quer zur Fahrtrichtung nebeneinander angeordnete Ausbringaggregate 10 auf, wobei jedes Ausbringaggregat beispielsweise einer Reihe zugeordnet wird, sodass der Dünger und das Saatgut reihenbezogen auf der landwirtschaftlichen Nutzfläche ausgebracht werden kann. Entsprechende Ausbringaggregate 10 werden aus diesem Grund auch als Reiheneinheiten bezeichnet.

Das Ausbringaggregat 10 umfasst einen Trägermechanismus 12. Der Trägermechanismus 12 umfasst ein Anbauteil 14, mittels welchem der Trägermechanismus 12 an einem Aggregateträger 16 der Ausbringmaschine befestigt ist. Der Aggregateträger 16 ist ein quer zur Fahrtrichtung verlaufender Querbalken, an welchem mehrere Ausbringaggregate 10 befestigt sein können.

Der Trägermechanismus 12 umfasste eine Auslenkmechanik 18 mit zwei gelenkig miteinander verbundenen Lenkern 20a, 20b, wobei der Lenker 20a gelenkig an dem Anbauteil 14 angelenkt ist. An dem Lenker 20b ist eine Düngerablageeinrichtung 22 befestigt, welche zum Ablegen von Dünger auf die landwirtschaftliche Nutzfläche dient. Die Düngerablageeinrichtung 22 ist ein Düngerschar und umfasst zwei Scharscheiben 24, wobei die vordere Scharscheibe 24 in dieser Darstellung demontiert ist so dass der Blick auf eine zwischen den Scharscheiben 24 angeordnete Düngerablageleitung 26 freigegeben wird. Der Düngerablageleitung 26 kann abzulegender Dünger zugeführt werden, welcher über die Düngerabgabeöffnung 28 der Düngerablageleitung 26 in Richtung des Bodens B der landwirtschaftlichen Nutzfläche abgegeben wird. Die Düngerablageleitung 26 kann mit einer Düngerdosiereinrichtung zum Dosieren des abzulegenden Düngers verbunden sein. Die Düngerdosiereinrichtung kann beispielsweise ein Düngerportionierer sein, welcher den Dünger portioniert, sodass Düngerportionen über die Düngerablageleitung 26 auf der landwirtschaftlichen Nutzfläche abgelegt werden können. Düngerportionen sind Anhäufungen bestehend aus mehreren Körnern von Dünger die gebildet werden können um gebündelt auf der Nutzfläche abgelegt zu werden. Es entsteht somit ein Abgabetakt zwischen den einzelnen Düngerportionen im Gegensatz zur bisher üblichen kontinuierlichen Ablage von Dünger in Form eines Bandes wo eine variierende Lagebeziehung zwischen der Düngerablageeinrichtung und der Saatgutablageeinrichtung unerheblich sind.

Der Trägermechanismus 12 umfasst ferner eine Auslenkmechanik 30, wobei die Auslenkmechanik 30 als Parallelogrammgestänge mit einem Oberlenker 32a und einem Unterlenker 32b ausgeführt ist. Die Lenker 32a, 32b der Auslenkmechanik 30 sind auf der einen Seite gelenkig mit dem Anbauteil 14 und auf der anderen Seite gelenkig mit dem Trägerteil 35 verbunden. An dem Trägerteil 35 ist eine als Säschar ausgebildete Saatgutablageeinrichtung 34 befestigt. Die Saatgutablageeinrichtung 34 dient zum Ablegen von Saatkörnern auf die landwirtschaftliche Nutzfläche und umfasst zwei Scharscheiben 36 und eine zwischen den Scharscheiben 36 angeordnete Saatgutablageeinrichtung 38. Über die Saatgutabgabeöffnung 40 der Saatgutablageleitung 38 werden vereinzelte Saatkörner auf die landwirtschaftliche Nutzfläche abgegeben. In Fahrtrichtung vor der Saatgutabgabeöffnung 40 umfasst die Saatgutablageeinrichtung 34 einen Furchenformer 42, welcher zum Ausformen der durch die Scharscheiben 36 geöffneten Ablagefurche dient.

Mittels der Auslenkmechanik 18 ist die Düngerablageeinrichtung 22 zur Verfolgung der Bodenkontur der landwirtschaftlichen Nutzfläche in Bezug auf das Anbauteil 14 des Trägermechanismus 12 auslenkbar. Mittels der Auslenkmechanik 30 ist die Saatgutablageeinrichtung 34 zur Verfolgung der Bodenkontur der landwirtschaftlichen Nutzfläche in Bezug auf das Anbauteil 14 des Trägermechanismus 12 auslenkbar.

Die Vereinzelung der Saatkörner erfolgt über die als Saatkornvereinzelungseinrichtung ausgebildete Saatgutdosiereinrichtung 44. Die Saatgutdosiereinrichtung 44 kann ein rotatorisch angetriebenes Vereinzelungselement, beispielsweise eine Vereinzelungsscheibe, umfassen, wobei Saatgutaufnahmeausnehmungen in der Vereinzelungsscheibe zum Vereinzeln der Saatkörner genutzt werden. Die Saatgutdosiereinrichtung 44 wird mit Saatgut aus dem Vorratsbehälter 46 beschickt, wobei der Vorratsbehälter 46 über einen Behälterträger 48 mit dem Trägermechanismus 12 verbunden ist.

Der Trägermechanismus 12 erlaubt aufgrund der Auslenkmechanik 18 und der Auslenkmechanik 30 eine Veränderung der Lagebeziehung zwischen der Düngerablageeinrichtung 22 und der Saatgutablageeinrichtung 34.

Das Ausbringaggregat 10 umfasst ein Lageerfassungssystem 52, 54, über welches die den Längsabstand des auf der landwirtschaftlichen Nutzfläche abgelegten Düngers und des auf der landwirtschaftlichen Nutzfläche abgelegten Saatguts beeinflussende Lagebeziehung zwischen der Düngerablageeinrichtung 22 und der Saatgutablageeinrichtung 34 sensorgestützt erfasst werden kann. Das Lageerfassungssystem umfasst einen Sensor 54 und eine elektronische Datenverarbeitungseinrichtung 52, wobei die elektronische Datenverarbeitungseinrichtung 52 die Sensordaten des Sensors zum Erfassen der Lagebeziehung zwischen der Düngerablageeinrichtung und der Saatgutablageeinrichtung 34 auswertet. Der Trägermechanismus 12 erlaubt eine Veränderung des Längsabstands x zwischen der Düngerabgabeöffnung 28 und der Saatgutabgabeöffnung 40. Die von dem Lageerfassungssystem 52, 54 erfasste Lagebeziehung zwischen der Düngerablageeinrichtung 22 und der Saatgutablageeinrichtung 34 betrifft den Längsabstand x zwischen der Düngerabgabeöffnung 28 und der Saatgutabgabeöffnung 40. Da die Düngerabgabeöffnung 28 den Abgabepunkt des Düngers vorgibt und die Saatgutabgabeöffnung 40 den Abgabepunkt des Saatguts vorgibt, kann über den Längsabstand x zwischen der Düngerabgabeöffnung 28 und der Saatgutabgabeöffnung 40 der Längsabstand des auf der landwirtschaftlichen Nutzfläche abgelegten Düngers und des auf der landwirtschaftlichen Nutzfläche abgelegten Saatguts ermittelt werden.

Der Sensor 54 ist in dem Gelenk zwischen den Lenkern 20a, 20b der Auslenkmechanik 18 angeordnet und dient zum Erfassen des Auslenkungszustands der die Düngerablage beeinflussenden Auslenkmechanik 18. Der Sensor 54 ist als Winkelsensor ausgebildet und erfasst den Winkel zwischen den Lenkern 20a, 20b. Die elektronische Datenverarbeitungseinrichtung 52 berechnet den Längsabstand x zwischen der Düngerabgabeöffnung 28 und der Saatgutabgabeöffnung 40 auf Grundlage des die Düngerablage beeinflussenden Auslenkungszustands der Auslenkmechanik 18. Die die Düngerablage beeinflussende Auslenkmechanik 18 und die die Saatgutablage beeinflussende Auslenkmechanik 30 sind über eine Koppelstange 58 mechanisch miteinander gekoppelt. Die Koppelstange 58 ist gelenkig an dem Unterlenker 32b der Auslenkmechanik 30 und dem Lenker 20b der Auslenkmechanik 18 angelenkt.

Wenn die Datenverarbeitungseinrichtung 52 feststellt, dass der Längsabstand x aufgrund einer Auslenkung der Düngerablageeinrichtung 22 und/oder aufgrund einer Auslenkung der Saatgutablageeinrichtung 34 außerhalb eines Toleranzbereichs liegt, sodass der Längsabstand x zu einer unbeabsichtigten Lagebeziehung zwischen Dünger und Saatgut auf der landwirtschaftlichen Nutzfläche führt, kann über eine Steuerungseinrichtung 50 der Betrieb der Düngerdosiereinrichtung und/oder der Betrieb der Saatgutdosiereinrichtung 44 angepasst werden. Durch ein Anpassen des Betriebs der Düngerdosiereinrichtung und/oder der Saatgutdosiereinrichtung können die Abgabezeitpunkte der erzeugten Düngerportionen und/oder vereinzelten Saatkörner temporär angepasst werden, sodass die Dünger- und Saatgutablage wieder durch aufeinander abgestimmte Abgabezeitpunkte von Dünger und Saatgut synchronisiert werden. Hierzu kann beispielsweise die Drehzahl eines rotatorisch angetriebenen Portionierelements, beispielsweise eines Portionierflügels, der Düngerdosiereinrichtung und/oder die Drehzahl eines Vereinzelungselements, beispielsweise einer Vereinzelungsscheibe, der Saatgutdosiereinrichtung 44 temporär angepasst werden.

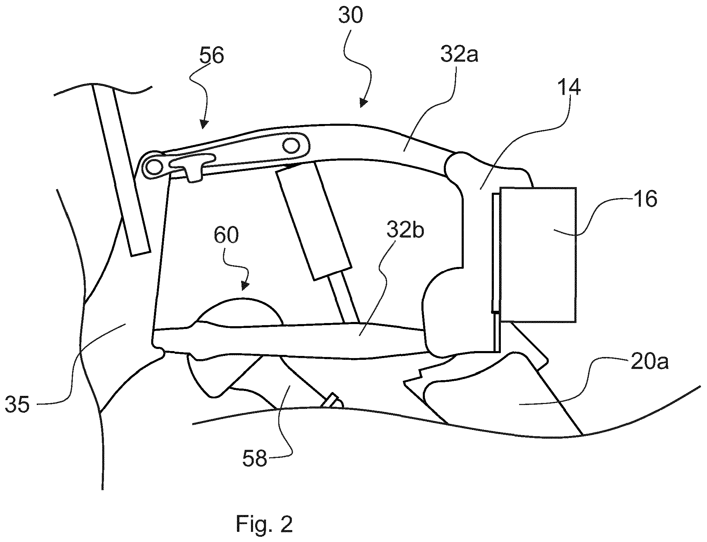

Die Fig. 2 zeigt, dass das Lageerfassungssystem alternativ oder zusätzlich zu dem Sensor 54 an der Auslenkmechanik 18 einen Sensor 56 an der Auslenkmechanik 30 umfassen kann. Der Sensor 56 dient zum Erfassen des Auslenkungszustands der Auslenkmechanik 30. Der Auslenkungszustand der Auslenkmechanik 30 wird durch den Sensor 56 über die Ausrichtung des Oberlenkers 32a erfasst.

Die elektronische Datenverarbeitungseinrichtung 52 berechnet den Längsabstand x zwischen der Düngerabgabeöffnung 28 und der Saatgutabgabeöffnung 40 dann auch auf Grundlage des Auslenkungszustands der die Saatgutablage beeinflussenden Auslenkmechanik 30. Das Lageerfassungssystem kann entweder einen der Sensoren 54, 56 oder beide Sensoren 54, 56 umfassen.

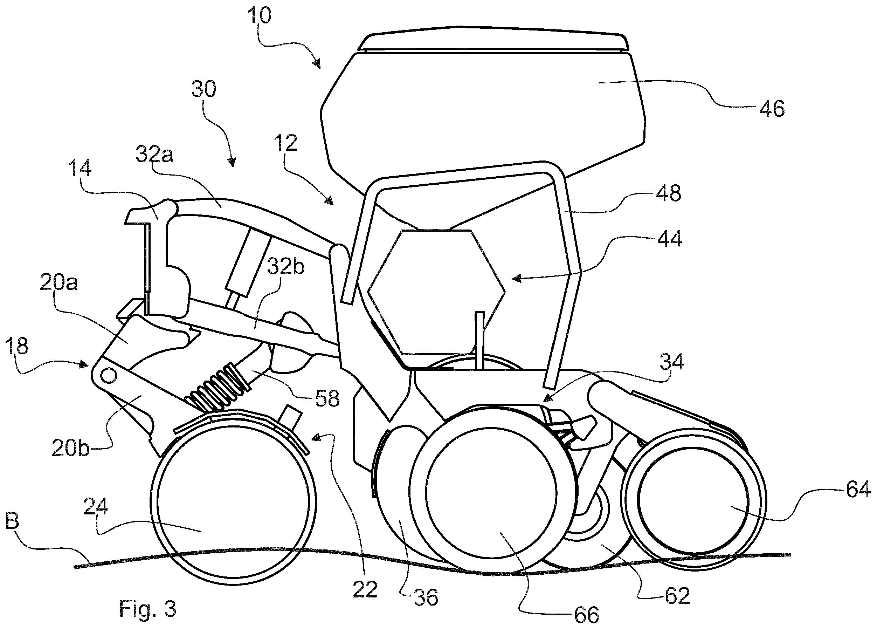

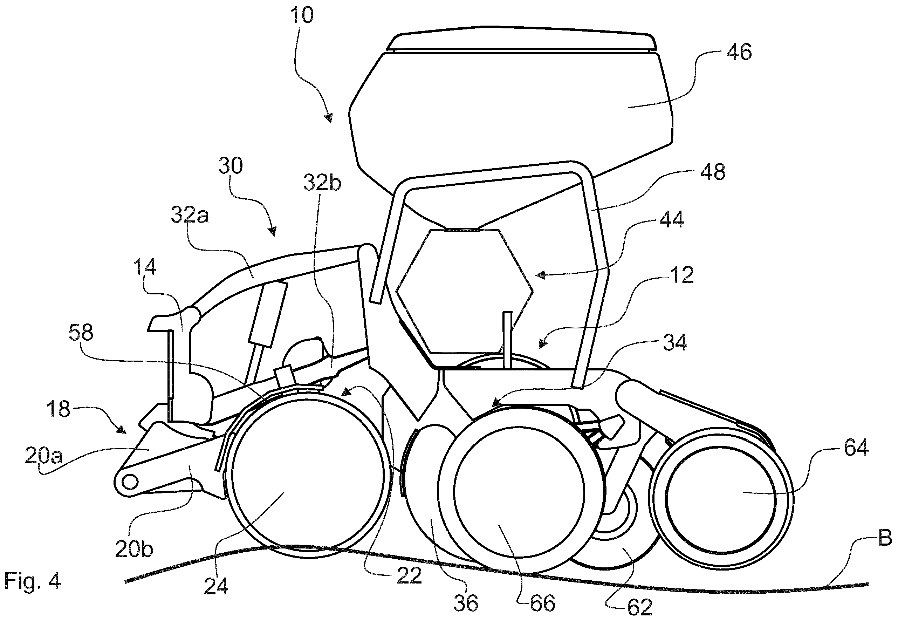

Die Fig. 3 und 4 zeigen die kinematische Kopplung der Auslenkmechanik 18 und der Auslenkmechanik 30 über die Koppelstange 58.

Das Ausbringaggregat 10 umfasst eine Tiefenführungsrolle 66, welche seitlich neben der Saatgutablageeinrichtung 34 angeordnet ist. Hinter den Scharscheiben 36 der Saatgutablageeinrichtung 34 befindet sich eine Fangrolle 62 zum Abfangen des abgelegten Saatguts und V-förmig angestellte Andruckrollen 64 zum Schließen der Säfurche.

In der in der Fig. 3 dargestellten Ausbringsituation überfährt die Tiefenführungsrolle 66 eine Senke, sodass die Saatgutablageeinrichtung 34 über die Auslenkmechanik 30 in Bezug auf das Anbauteil 14 nach unten ausgelenkt wird. Über die Koppelstange 58 wird durch die Auslenkung der Auslenkmechanik 30 auch der Auslenkungszustand der die Düngerablage beeinflussenden Auslenkmechanik 18 beeinflusst, sodass trotz fehlender Tiefenführungsrolle an der Düngerablageeinrichtung 22 eine bodenkonturspezifische Führung der Düngerablageeinrichtung 22 erreicht wird.

Bei dem in der Fig. 4 dargestellten Ausbringzustand überfährt die Tiefenführungsrolle 66 eine Kuppe, sodass die Saatgutablageeinrichtung 34 über die Auslenkmechanik 30 in Bezug auf das Anbauteil 14 nach oben ausgelenkt wird. Über die Koppelstange 58 beeinflusst auch diese Auslenkung den Auslenkungszustand der die Düngerablage beeinflussenden Auslenkmechanik 18, sodass erneut eine bodenkonturspezifische Führung der Düngerablageeinrichtung 22 erreicht wird.

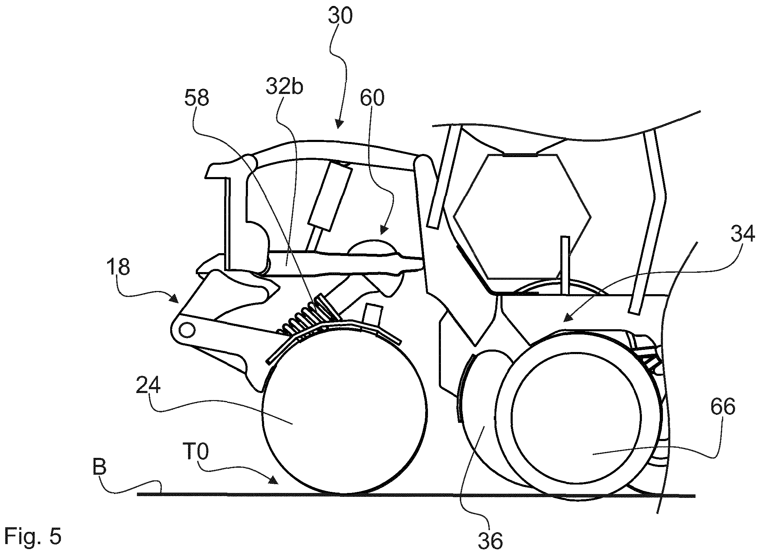

Die Fig. 5 bis 7 zeigen, dass die Ablagetiefe des Düngers über ein Einstellglied 60 veränderbar ist. Das Einstellglied 60 ist als Exzenter ausgebildet und verbindet den Unterlenker 32a der Auslenkmechanik 30 mit der Koppelstange 58. Über das Einstellglied 60 kann der obere Anlenkpunkt der Koppelstange 58 verändert werden, sodass der Abstand zwischen den Scharscheiben 24 der Düngerablageeinrichtung 22 und der Auslenkmechanik 30 veränderbar ist. Bei dem in der Fig. 5 dargestellten Einstellzustand ist eine minimale Düngerablagetiefe T₀ eingestellt.

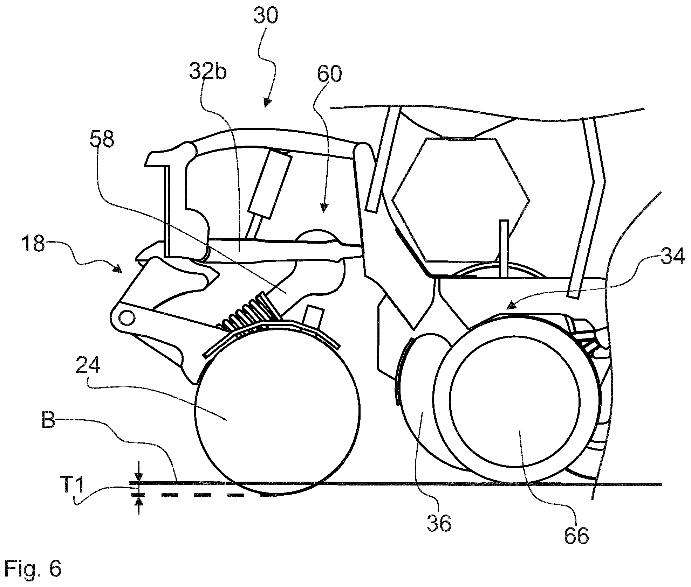

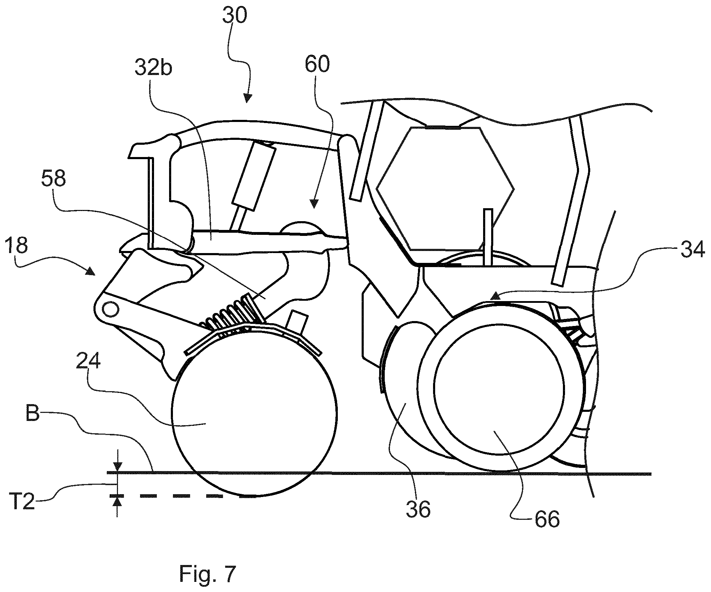

Durch Verdrehen des als Exzenter ausgebildeten Einstellglieds 60 kann die Düngerablagetiefe auf das Maß T₁ gebracht werden, wie in der Fig. 6 dargestellt. Eine weitere Verdrehung des als Exzenter ausgebildeten Einstellglieds 60 führt zu einer weiteren Erhöhung der Düngerablagetiefe auf das Maß T₂, wie in der Fig. 7 dargestellt.

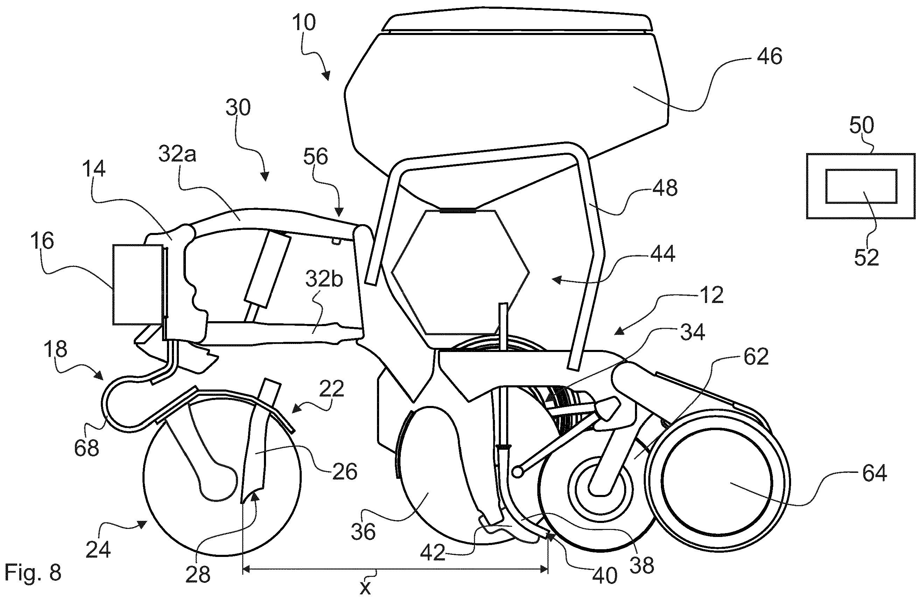

Die Fig. 8 zeigt ein Ausbringaggregat 10, bei welchem die die Düngerablage beeinflussende Auslenkmechanik 18 eine als Blattfederung ausgeführte Federung 68 umfasst.

Das Ausbringaggregat 10 umfasst ein Lageerfassungssystem 52, 56 zum sensorgestützten Erfassen der den Längsabstand des auf der landwirtschaftlichen Nutzfläche abgelegten Düngers und des auf der landwirtschaftlichen Nutzfläche abgelegten Saatguts beeinflussenden Lagebeziehung zwischen der Düngerablageeinrichtung 22 und der Saatgutablageeinrichtung 34.

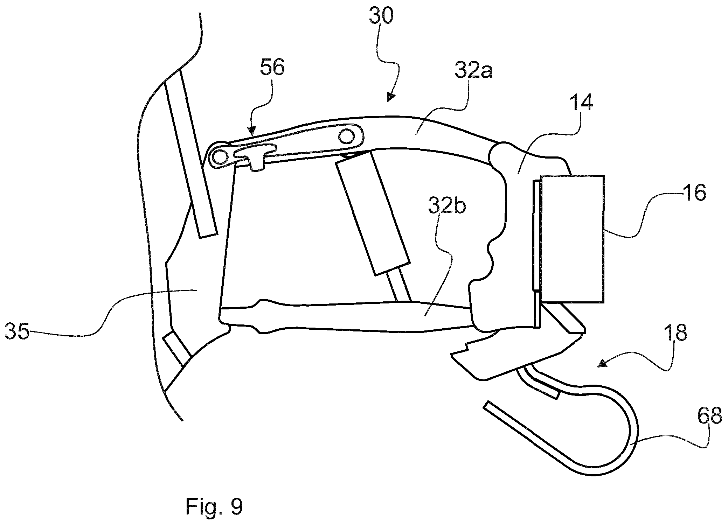

Wie in der Fig. 9 gezeigt, ist der Sensor 56 des Lageerfassungssystems am Oberlenker 32a der Auslenkmechanik 30 angeordnet, sodass der Auslenkungszustand der Auslenkmechanik 30 über die Ausrichtung des Oberlenkers 32 ermittelt werden kann.

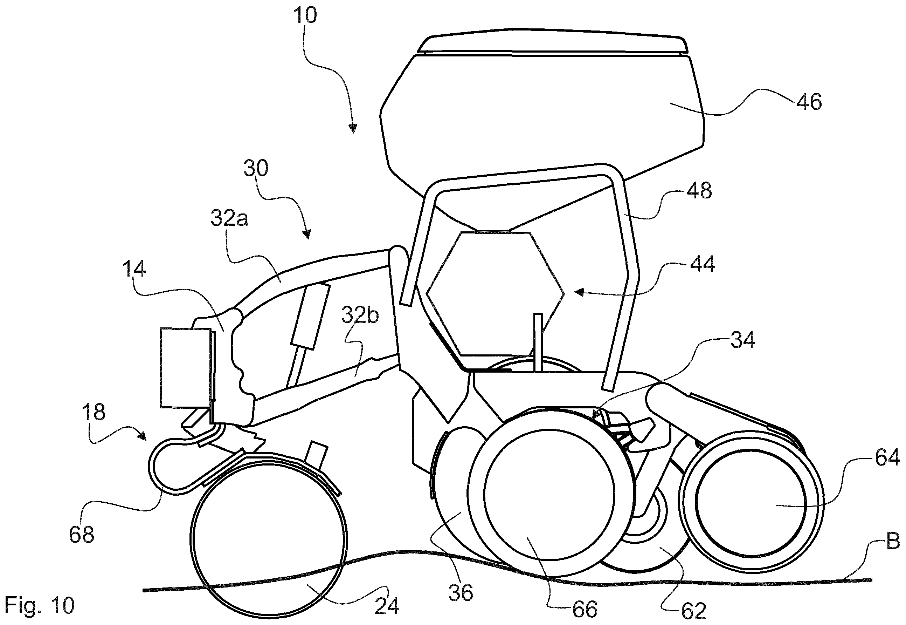

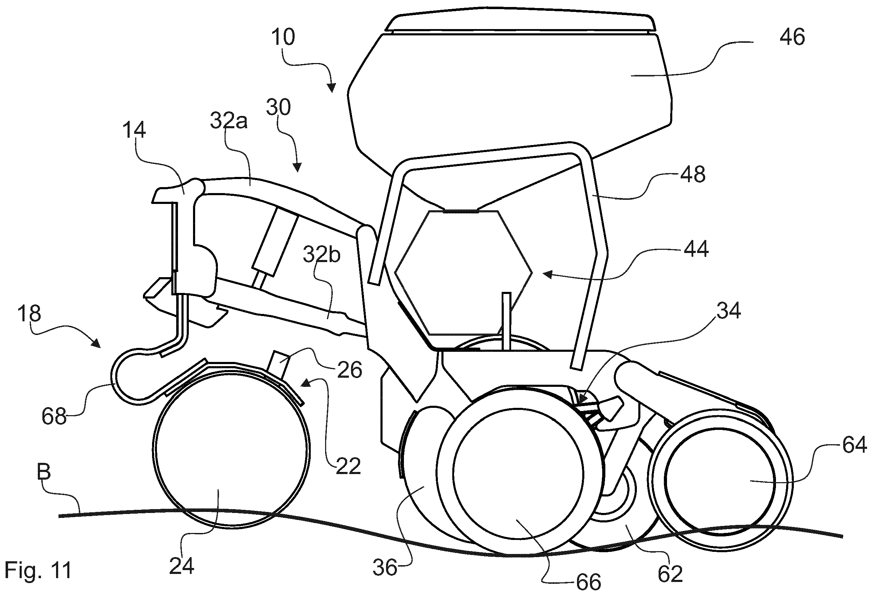

Die Fig. 10 und 11 zeigen, dass auch über die Blattfeder 68 zwischen dem Anbauteil 14 und der Düngerablageeinrichtung 22 die Verfolgung der Kontur des Bodens B durch die Düngerablageeinrichtung 22 möglich ist. Insofern kann beim Überfahren einer Kuppe (vgl. Fig. 10) und beim Überfahren einer Senke (vgl. Fig. 11) eine geeignete Düngerablagetiefe beibehalten werden.

### Bezugszeichen

- 10: Ausbringaggregat
- 12: Trägermechanismus
- 14: Anbauteil
- 16: Aggregateträger
- 18: Auslenkmechanik
- 20a, 20b: Lenker
- 22: Düngerablageeinrichtung
- 24: Scharscheiben
- 26: Düngerablageleitung
- 28: Düngerabgabeöffnung
- 30: Auslenkmechanik
- 32a, 32b: Lenker
- 34: Saatgutablageeinrichtung
- 35: Trägerteil
- 36: Scharscheiben
- 38: Saatgutablageleitung
- 40: Saatgutabgabeöffnung
- 42: Furchenformer
- 44: Saatgutdosiereinrichtung
- 46: Vorratsbehälter
- 48: Behälterträger
- 50: Steuerungseinrichtung
- 52: Datenverarbeitungseinrichtung
- 54: Sensor
- 56: Sensor
- 58: Koppelstange
- 60: Einstellglied
- 62: Fangrolle
- 64: Andruckrollen
- 66: Tiefenführungsrolle
- 68: Federung

- B: Boden
- T₀, T₁, T₂: Ablagetiefen
- x: Längsabstand

## Patentansprüche

1. Ausbringaggregat (10) für eine landwirtschaftliche Ausbringmaschine, mit
- einer Düngerablageeinrichtung (22) zum Ablegen von Dünger auf eine landwirtschaftliche Nutzfläche; und
- einer Saatgutablageeinrichtung (34) zum Ablegen von Saatkörnern auf die landwirtschaftliche Nutzfläche;
wobei die Düngerablageeinrichtung (22) und die Saatgutablageeinrichtung (34) an einem Trägermechanismus (12) befestigt sind und der Trägermechanismus (12) eine Veränderung der Lagebeziehung zwischen der Düngerablageeinrichtung (22) und der Saatgutablageeinrichtung (34) erlaubt;
und mit einem Lageerfassungssystem (52, 54, 56), welches dazu eingerichtet ist, eine den Längsabstand des auf der landwirtschaftlichen Nutzfläche abgelegten Düngers und des auf der landwirtschaftlichen Nutzfläche abgelegten Saatguts beeinflussende Lagebeziehung zwischen der Düngerablageeinrichtung (22) und der Saatgutablageeinrichtung (34) sensorunterstützt zu erfassen, **gekennzeichnet durch**
- eine als Düngerportionierer ausgeführte Düngerdosiereinrichtung, welche dazu eingerichtet ist, den abzulegenden Dünger zu portionieren,
- eine als Saatkornvereinzelungseinrichtung ausgeführte Saatgutdosiereinrichtung (44), welche dazu eingerichtet ist, das abzulegende Saatgut zu vereinzeln, und
- eine Steuerungseinrichtung (50), welche dazu eingerichtet ist,
- den Betrieb der Düngerdosiereinrichtung in Abhängigkeit der Lagebeziehung zwischen der Düngerablageeinrichtung (22) und der Saatgutablageeinrichtung (34) zu steuern; und/oder
- den Betrieb der Saatgutdosiereinrichtung (44) in Abhängigkeit der Lagebeziehung zwischen der Düngerablageeinrichtung (22) und der Saatgutablageeinrichtung (34) zu steuern; und/oder
- den Betrieb der Düngerdosiereinrichtung und den Betrieb der Saatgutdosiereinrichtung (44) in Abhängigkeit der Lagebeziehung zwischen der Düngerablageeinrichtung (22) und der Saatgutablageeinrichtung (34) aufeinander abzustimmen.

2. Ausbringaggregat (10) nach Anspruch 1,
**dadurch gekennzeichnet, dass** das Lageerfassungssystem (52, 54, 56) zumindest einen Sensor (54, 56) und eine elektronische Datenverarbeitungseinrichtung (52) aufweist, wobei die elektronische Datenverarbeitungseinrichtung (52) dazu eingerichtet ist, Sensordaten des Sensors zum Erfassen der Lagebeziehung zwischen der Düngerablageeinrichtung (22) und der Saatgutablageeinrichtung (34) auszuwerten.

3. Ausbringaggregat (10) nach Anspruch 1 oder 2,
**dadurch gekennzeichnet, dass**
- die Düngerablageeinrichtung (22) eine Düngerabgabeöffnung (28) zum Abgeben von Dünger in Richtung des Bodens (B) der landwirtschaftlichen Nutzfläche aufweist; und
- die Saatgutablageeinrichtung (34) eine Saatgutabgabeöffnung (40) zum Abgeben von Saatkörnern in Richtung des Bodens (B) der landwirtschaftlichen Nutzfläche aufweist;
wobei der Trägermechanismus (12) eine Veränderung des Längsabstands (x) zwischen der Düngerabgabeöffnung (28) und der Saatgutabgabeöffnung (40) erlaubt und die von dem Lageerfassungssystem (52, 54, 56) sensorunterstützt erfassbare Lagebeziehung zwischen der Düngerablageeinrichtung (22) und der Saatgutablageeinrichtung (34) den Längsabstand (x) zwischen der Düngerabgabeöffnung (28) und der Saatgutabgabeöffnung (40) umfasst.

4. Ausbringaggregat (10) nach einem der vorstehenden Ansprüche,
**dadurch gekennzeichnet, dass** der Trägermechanismus (12) eine Veränderung der Ausrichtung der Düngerablageeinrichtung (22) erlaubt, wobei die von dem Lageerfassungssystem (52, 54, 56) sensorunterstützt erfassbare Lagebeziehung zwischen der Düngerablageeinrichtung (22) und der Saatgutablageeinrichtung (34) die Ausrichtung der Düngerablageeinrichtung (22) und/oder die Relativausrichtung von Düngerablageeinrichtung (22) und Saatgutablageeinrichtung (34) umfasst.

5. Ausbringaggregat (10) nach einem der vorstehenden Ansprüche,
**dadurch gekennzeichnet, dass** der Trägermechanismus (12) ein Anbauteil (14) aufweist, mittels welchem der Trägermechanismus (12) an einem Aggregateträger (16), insbesondere einem Querbalken, der Ausbringmaschine befestigbar ist, wobei der Trägermechanismus (12) vorzugsweise eine die Saatgutablage beeinflussende Auslenkmechanik (30) umfasst, mittels welcher die Saatgutablageeinrichtung (34), insbesondere zur Verfolgung der Bodenkontur der landwirtschaftlichen Nutzfläche, in Bezug auf das Anbauteil (14) des Trägermechanismus (12) auslenkbar ist.

6. Ausbringaggregat (10) nach Anspruch 5,
**dadurch gekennzeichnet, dass** der Trägermechanismus (12) eine die Saatgutablage beeinflussende Auslenkmechanik (30) umfasst, mittels welcher die Saatgutablageeinrichtung (34), insbesondere zur Verfolgung der Bodenkontur der landwirtschaftlichen Nutzfläche, in Bezug auf das Anbauteil (14) des Trägermechanismus (12) auslenkbar ist, wobei zumindest ein Sensor (54, 56) des Lageerfassungssystems (52, 54, 56) dazu eingerichtet ist, einen Auslenkungszustand der die Saatgutablage beeinflussenden Auslenkmechanik (30) zu erfassen.

7. Ausbringaggregat (10) nach Anspruch 5 oder 6,
**dadurch gekennzeichnet, dass** der Trägermechanismus (12) eine die Düngerablage beeinflussende Auslenkmechanik (18) umfasst, mittels welcher die Düngerablageeinrichtung (22), insbesondere zur Verfolgung der Bodenkontur der landwirtschaftlichen Nutzfläche, in Bezug auf das Anbauteil (14) des Trägermechanismus (12) auslenkbar ist.

8. Ausbringaggregat (10) nach Anspruch 7,
**dadurch gekennzeichnet, dass** zumindest ein Sensor (54, 56) des Lageerfassungssystems (52, 54, 56) dazu eingerichtet ist, einen Auslenkungszustand der die Düngerablage beeinflussenden Auslenkmechanik (18) zu erfassen.

9. Ausbringaggregat (10) nach Anspruch 7 oder 8,
**dadurch gekennzeichnet, dass** der Trägermechanismus (12) eine die Saatgutablage beeinflussende Auslenkmechanik (30) umfasst, mittels welcher die Saatgutablageeinrichtung (34), insbesondere zur Verfolgung der Bodenkontur der landwirtschaftlichen Nutzfläche, in Bezug auf das Anbauteil (14) des Trägermechanismus (12) auslenkbar ist, wobei die die Saatgutablage beeinflussende Auslenkmechanik (30) und die die Düngerablage beeinflussende Auslenkmechanik (18) mechanisch miteinander gekoppelt sind.

10. Ausbringaggregat (10) nach einem der Ansprüche 7 bis 9,
**dadurch gekennzeichnet, dass** die die Düngerablage beeinflussende Auslenkmechanik (18) eine Federung (68), insbesondere eine Blattfederung, umfasst.

11. Ausbringaggregat (10) nach einem der vorstehenden Ansprüche,
**dadurch gekennzeichnet, dass** das Lageerfassungssystem (52, 54, 56) dazu eingerichtet ist, einen Laufruhewert zu berechnen, welcher die Laufruhe der Düngerablageeinrichtung (22) charakterisiert, insbesondere auf Grundlage von über einen Zeitraum ermittelten Lageveränderungen der Düngerablageeinrichtung (22) und/oder auf Grundlage von über einen Zeitraum ermittelten Lagebeziehungen zwischen der Düngerablageeinrichtung (22) und der Saatgutablageeinrichtung (34).

12. Ausbringaggregat (10) nach einem der vorstehenden Ansprüche,
**dadurch gekennzeichnet, dass**
- die Düngerablageeinrichtung (22) eine Düngerablageleitung (26) und/oder eine Düngerabgabeöffnung (28) umfasst; und/oder
- die Saatgutablageeinrichtung (34) eine Saatgutablageleitung (38) und/oder eine Saatgutabgabeöffnung (40) umfasst
wobei die Steuerungseinrichtung (50) dazu eingerichtet ist,
- einen Positionierantrieb zum Ändern der Position der Düngerabgabeöffnung (28) und/oder der Ausrichtung der Düngerablageleitung (26) in Abhängigkeit der Lagebeziehung zwischen der Düngerablageeinrichtung (22) und der Saatgutablageeinrichtung (34) zu steuern; und/oder
- einen Positionierantrieb zum Ändern der Position der Saatgutabgabeöffnung (40) und/oder der Ausrichtung der Saatgutablageleitung (38) in Abhängigkeit der Lagebeziehung zwischen der Düngerablageeinrichtung (22) und der Saatgutablageeinrichtung (34) zu steuern.

13. Verfahren zum Betreiben eines Ausbringaggregats (10) nach einem der vorstehenden Ansprüche,
**gekennzeichnet durch** den Schritt:
- Erfassen einer veränderbaren Lagebeziehung zwischen der Düngerablageeinrichtung (22) und der Saatgutablageeinrichtung (34) mittels eines Lageerfassungssystems (52, 54, 56);
wobei eine Steuerungseinrichtung (50)
- den Betrieb einer als Düngerportionierer ausgeführten Düngerdosiereinrichtung des Ausbringaggregats (10), welche dazu eingerichtet ist, den abzulegenden Dünger zu portionieren,
und/oder
- den Betrieb einer als Saatkornvereinzelungseinrichtung ausgeführten Saatgutdosiereinrichtung (44) des Ausbringaggregats (10), welche dazu eingerichtet ist, das abzulegende Saatgut zu vereinzeln,
in Abhängigkeit der erfassten Lagebeziehung zwischen der Düngerablageeinrichtung (22) und der Saatgutablageeinrichtung (34) steuert.

14. Verfahren nach Anspruch 13,
**dadurch gekennzeichnet, dass** die Steuerungseinrichtung (50)
- einen Positionierantrieb des Ausbringaggregats (10) zum Ändern der Position einer Düngerabgabeöffnung (28) des Ausbringaggregats (10) und/oder der Ausrichtung einer Düngerablageleitung (26) des Ausbringaggregats (10); und/oder
- einen Positionierantrieb des Ausbringaggregats (10) zum Ändern der Position einer Saatgutabgabeöffnung (40) des Ausbringaggregats (10) und/oder der Ausrichtung einer Saatgutablageleitung (38) des Ausbringaggregats (10)
in Abhängigkeit der erfassten Lagebeziehung zwischen der Düngerablageeinrichtung (22) und der Saatgutablageeinrichtung (34) steuert.

## Claims

1. Spreading unit (10) for an agricultural spreading machine, which spreading unit comprises
- a fertilizer depositing device (22) for depositing fertilizer onto agricultural land; and
- a seed depositing device (34) for depositing seed onto the agricultural land;
wherein the fertilizer depositing device (22) and the seed depositing device (34) are fastened to a support mechanism (12) and the support mechanism (12) allows a change in the positional relationship between the fertilizer depositing device (22) and the seed depositing device (34);
and which spreading unit comprises a position detection system (52, 54, 56) which is designed to detect, assisted by sensors, a positional relationship between the fertilizer depositing device (22) and the seed depositing device (34), which positional relationship influences the longitudinal spacing of the fertilizer deposited on the agricultural land and the seed deposited on the agricultural land, **characterized by**
- a fertilizer metering device, designed as a fertilizer portioner, which is designed to portion the fertilizer to be deposited,
- a seed metering device (44), designed as a seed singling device, which is designed to singulate the seed to be deposited, and
- a control device (50) which is designed
- to control the operation of the fertilizer metering device depending on the positional relationship between the fertilizer depositing device (22) and the seed depositing device (34); and/or
- to control the operation of the seed metering device (44) depending on the positional relationship between the fertilizer depositing device (22) and the seed depositing device (34); and/or
- to coordinate the operation of the fertilizer metering device and the operation of the seed metering device (44) with one another depending on the positional relationship between the fertilizer depositing device (22) and the seed depositing device (34).

2. Spreading unit (10) according to claim 1,
**characterized in that** the position detection system (52, 54, 56) comprises at least one sensor (54, 56) and an electronic data processing device (52), wherein the electronic data processing device (52) is designed to evaluate sensor data of the sensor in order to detect the positional relationship between the fertilizer depositing device (22) and the seed depositing device (34).

3. Spreading unit (10) according to claim 1 or claim 2,
**characterized in that**
- the fertilizer depositing device (22) has a fertilizer delivery opening (28) for delivering fertilizer toward the soil (B) of the agricultural land; and
- the seed depositing device (34) has a seed delivery opening (40) for delivering seed toward the soil (B) of the agricultural land;
wherein the support mechanism (12) allows a change in the longitudinal spacing (x) between the fertilizer delivery opening (28) and the seed delivery opening (40) and the positional relationship between the fertilizer depositing device (22) and the seed depositing device (34), which positional relationship can be detected by the position detection system (52, 54, 56), assisted by sensors, comprises the longitudinal spacing (x) between the fertilizer delivery opening (28) and the seed delivery opening (40).

4. Spreading unit (10) according to any of the preceding claims, **characterized in that** the support mechanism (12) allows a change in the orientation of the fertilizer depositing device (22), wherein the positional relationship between the fertilizer depositing device (22) and the seed depositing device (34), which positional relationship can be detected by the position detection system (52, 54, 56), assisted by sensors, comprises the orientation of the fertilizer depositing device (22) and/or the relative orientation of the fertilizer depositing device (22) and the seed depositing device (34).

5. Spreading unit (10) according to any of the preceding claims,
**characterized in that** the support mechanism (12) has an attachment part (14) by means of which the support mechanism (12) can be fastened to a unit support (16), in particular a crossbar, of the spreading machine, wherein the support mechanism (12) preferably comprises a deflection mechanism (30) influencing the seed deposit, by means of which deflection mechanism the seed depositing device (34) can be deflected in relation to the attachment part (14) of the support mechanism (12), in particular for following the soil contour of the agricultural land.

6. Spreading unit (10) according to claim 5,
**characterized in that** the support mechanism (12) comprises a deflection mechanism (30) influencing the seed deposit, by means of which deflection mechanism the seed depositing device (34) can be deflected in relation to the attachment part (14) of the support mechanism (12), in particular for following the soil contour of the agricultural land, wherein at least one sensor (54, 56) of the position detection system (52, 54, 56) is designed to detect a deflection state of the deflection mechanism (30) influencing the seed deposit.

7. Spreading unit (10) according to claim 5 or claim 6,
**characterized in that** the support mechanism (12) comprises a deflection mechanism (18) influencing the fertilizer deposit, by means of which deflection mechanism the fertilizer depositing device (22) can be deflected in relation to the attachment part (14) of the support mechanism (12), in particular for following the soil contour of the agricultural land.

8. Spreading unit (10) according to claim 7,
**characterized in that** at least one sensor (54, 56) of the position detection system (52, 54, 56) is designed to detect a deflection state of the deflection mechanism (18) influencing the fertilizer deposit.

9. Spreading unit (10) according to claim 7 or claim 8,
**characterized in that** the support mechanism (12) comprises a deflection mechanism (30) influencing the seed deposit, by means of which deflection mechanism the seed depositing device (34) can be deflected in relation to the attachment part (14) of the support mechanism (12), in particular for following the soil contour of the agricultural land, wherein the deflection mechanism (30) influencing the seed deposit and the deflection mechanism (18) influencing the fertilizer deposit are mechanically coupled to one another.

10. Spreading unit (10) according to any of claims 7 to 9,
**characterized in that** the deflection mechanism (18) influencing the fertilizer deposit comprises a suspension (68), in particular a leaf spring suspension.

11. Spreading unit (10) according to any of the preceding claims,
**characterized in that** the position detection system (52, 54, 56) is designed to calculate a smooth-running value which characterizes the smooth running of the fertilizer depositing device (22), in particular on the basis of positional changes of the fertilizer depositing device (22) ascertained over a period of time and/or on the basis of positional relationships between the fertilizer depositing device (22) and the seed depositing device (34) ascertained over a period of time.

12. Spreading unit (10) according to any of the preceding claims, **characterized in that**
- the fertilizer depositing device (22) comprises a fertilizer depositing line (26) and/or a fertilizer delivery opening (28); and/or
- the seed depositing device (34) comprises a seed depositing line (38) and/or a seed delivery opening (40),
wherein the control device (50) is designed
- to control a positioning drive for changing the position of the fertilizer delivery opening (28) and/or for changing the orientation of the fertilizer depositing line (26) depending on the positional relationship between the fertilizer depositing device (22) and the seed depositing device (34); and/or
- to control a positioning drive for changing the position of the seed delivery opening (40) and/or for changing the orientation of the seed depositing line (38) depending on the positional relationship between the fertilizer depositing device (22) and the seed depositing device (34).

13. Method for operating a spreading unit (10) according to any of the preceding claims,
**characterized by** the step of:
- detecting a variable positional relationship between the fertilizer depositing device (22) and the seed depositing device (34) by means of a position detection system (52, 54, 56):
wherein a control device (50) controls
- the operation of a fertilizer metering device of the spreading unit (10), which fertilizer metering device is designed as a fertilizer portioner and is designed to portion the fertilizer to be deposited,
and/or
- the operation of a seed metering device (44) of the spreading unit (10), which seed metering device is designed as a seed singling device and is designed to singulate the seed to be deposited,
depending on the detected positional relationship between the fertilizer depositing device (22) and the seed depositing device (34).

14. Method according to claim 13,
**characterized in that** the control device (50) controls
- a positioning drive of the spreading unit (10) for changing the position of a fertilizer delivery opening (28) of the spreading unit (10) and/or for changing the orientation of a fertilizer depositing line (26) of the spreading unit (10); and/or
- a positioning drive of the spreading unit (10) for changing the position of a seed delivery opening (40) of the spreading unit (10) and/or for changing the orientation of a seed depositing line (38) of the spreading unit (10),
depending on the detected positional relationship between the fertilizer depositing device (22) and the seed depositing device (34).

## Revendications

1. Unité d'épandage (10) pour une machine d'épandage agricole, comportant
- un dispositif de dépôt d'engrais (22) permettant de déposer de l'engrais sur une surface agricole utile ; et
- un dispositif de dépôt de semences (34) permettant de déposer des graines de semences sur la surface agricole utile ;
dans laquelle le dispositif de dépôt d'engrais (22) et le dispositif de dépôt de semences (34) sont fixés à un mécanisme de support (12) et le mécanisme de support (12) permet de modifier la relation de position entre le dispositif de dépôt d'engrais (22) et le dispositif de dépôt de semences (34) ;
et comportant un système de détection de position (52, 54, 56) qui est configuré pour détecter, à l'aide de capteurs, une relation de position entre le dispositif de dépôt d'engrais (22) et le dispositif de dépôt de semences (34), laquelle relation de position influence la distance longitudinale de l'engrais déposé sur la surface agricole utile et des semences déposées sur la surface agricole utile, **caractérisée par**
- un dispositif de dosage d'engrais réalisé sous forme de dispositif de portionnement d'engrais, lequel est conçu pour portionner l'engrais à déposer,
- un dispositif de dosage de semences (44) réalisé sous forme de dispositif de séparation de graines de semences, lequel est conçu pour séparer les semences à déposer, et
- un dispositif de commande (50) qui est configuré pour
- commander le fonctionnement du dispositif de dosage d'engrais en fonction de la relation de position entre le dispositif de dépôt d'engrais (22) et le dispositif de dépôt de semences (34) ; et/ou
- commander le fonctionnement du dispositif de dosage de semences (44) en fonction de la relation de position entre le dispositif de dépôt d'engrais (22) et le dispositif de dépôt de semences (34) ; et/ou
- coordonner le fonctionnement du dispositif de dosage d'engrais et le fonctionnement du dispositif de dosage de semences (44) l'un avec l'autre en fonction de la relation de position entre le dispositif de dépôt d'engrais (22) et le dispositif de dépôt de semences (34).

2. Unité d'épandage (10) selon la revendication 1,
**caractérisée en ce que** le système de détection de position (52, 54, 56) présente au moins un capteur (54, 56) et un dispositif électronique de traitement de données (52), dans laquelle le dispositif électronique de traitement de données (52) est configuré pour évaluer des données de capteur du capteur pour la détection de la relation de position entre le dispositif de dépôt d'engrais (22) et le dispositif de dépôt de semences (34).

3. Unité d'épandage (10) selon la revendication 1 ou 2,
**caractérisée en ce que**
- le dispositif de dépôt d'engrais (22) présente une ouverture de distribution d'engrais (28) permettant de distribuer de l'engrais en direction du sol (B) de la surface agricole utile ; et
- le dispositif de dépôt de semences (34) présente une ouverture de distribution de semences (40) permettant de distribuer des graines de semences en direction du sol (B) de la surface agricole utile ;
dans laquelle le mécanisme de support (12) permet de modifier la distance longitudinale (x) entre l'ouverture de distribution d'engrais (28) et l'ouverture de distribution de semences (40), et la relation de position entre le dispositif de dépôt d'engrais (22) et le dispositif de dépôt de semences (34), laquelle peut être détectée par le système de détection de position (52, 54, 56) à l'aide de capteurs, comprend la distance longitudinale (x) entre l'ouverture de distribution d'engrais (28) et l'ouverture de distribution de semences (40).

4. Unité d'épandage (10) selon l'une des revendications précédentes,
**caractérisée en ce que** le mécanisme de support (12) permet de modifier l'orientation du dispositif de dépôt d'engrais (22), dans laquelle la relation de position entre le dispositif de dépôt d'engrais (22) et le dispositif de dépôt de semences (34), laquelle peut être détectée par le système de détection de position (52, 54, 56) à l'aide de capteurs, comprend l'orientation du dispositif de dépôt d'engrais (22) et/ou l'orientation relative du dispositif de dépôt d'engrais (22) et du dispositif de dépôt de semences (34).

5. Unité d'épandage (10) selon l'une des revendications précédentes,
**caractérisée en ce que** le mécanisme de support (12) présente une pièce rapportée (14) par le biais de laquelle le mécanisme de support (12) peut être fixé à un support d'unité (16), en particulier à une poutre transversale, de la machine d'épandage, dans laquelle le mécanisme de support (12) comprend de préférence un mécanisme de déviation (30) influençant le dépôt de semences, mécanisme de déviation par le biais duquel le dispositif de dépôt de semences (34) peut être dévié par rapport à la pièce rapportée (14) du mécanisme de support (12), en particulier pour suivre le contour du sol de la surface agricole utile.

6. Unité d'épandage (10) selon la revendication 5,
**caractérisée en ce que** le mécanisme de support (12) comprend un mécanisme de déviation (30) influençant le dépôt de semences, mécanisme de déviation par le biais duquel le dispositif de dépôt de semences (34) peut être dévié par rapport à la pièce rapportée (14) du mécanisme de support (12), en particulier pour suivre le contour du sol de la surface agricole utile, dans laquelle au moins un capteur (54, 56) du système de détection de position (52, 54, 56) est configuré pour détecter un état de déviation du mécanisme de déviation (30) influençant le dépôt de semences.

7. Unité d'épandage (10) selon la revendication 5 ou 6,
**caractérisée en ce que** le mécanisme de support (12) comprend un mécanisme de déviation (18) influençant le dépôt d'engrais, mécanisme de déviation par le biais duquel le dispositif de dépôt d'engrais (22) peut être dévié par rapport à la pièce rapportée (14) du mécanisme de support (12), en particulier pour suivre le contour du sol de la surface agricole utile.

8. Unité d'épandage (10) selon la revendication 7,
**caractérisée en ce qu**'au moins un capteur (54, 56) du système de détection de position (52, 54, 56) est configuré pour détecter un état de déviation du mécanisme de déviation (18) influençant le dépôt d'engrais.

9. Unité d'épandage (10) selon la revendication 7 ou 8,
**caractérisée en ce que** le mécanisme de support (12) comprend un mécanisme de déviation (30) influençant le dépôt de semences, mécanisme de déviation par le biais duquel le dispositif de dépôt de semences (34) peut être dévié par rapport à la pièce rapportée (14) du mécanisme de support (12), en particulier pour suivre le contour du sol de la surface agricole utile, dans laquelle le mécanisme de déviation (30) influençant le dépôt de semences et le mécanisme de déviation (18) influençant le dépôt d'engrais sont accouplés mécaniquement l'un à l'autre.

10. Unité d'épandage (10) selon l'une des revendications 7 à 9,
**caractérisée en ce que** le mécanisme de déviation (18) influençant le dépôt d'engrais comprend une suspension (68), en particulier une suspension à lames.

11. Unité d'épandage (10) selon l'une des revendications précédentes,
**caractérisée en ce que** le système de détection de position (52, 54, 56) est configuré pour calculer une valeur de fonctionnement silencieux qui caractérise le fonctionnement silencieux du dispositif de dépôt d'engrais (22), en particulier sur la base de changements de position du dispositif de dépôt d'engrais (22) qui sont déterminés sur une période de temps, et/ou sur la base de relations de position entre le dispositif de dépôt d'engrais (22) et le dispositif de dépôt de semences (34) qui sont déterminées sur une période de temps.

12. Unité d'épandage (10) selon au moins l'une des revendications précédentes, **caractérisée en ce que**
- le dispositif de dépôt d'engrais (22) comprend une conduite de dépôt d'engrais (26) et/ou une ouverture de distribution d'engrais (28) ; et/ou
- le dispositif de dépôt de semences (34) comprend une conduite de dépôt de semences (38) et/ou une ouverture de distribution de semences (40)
dans laquelle le dispositif de commande (50) est configuré pour
- commander un entraînement de positionnement permettant de modifier la position de l'ouverture de distribution d'engrais (28) et/ou l'orientation de la conduite de dépôt d'engrais (26) en fonction de la relation de position entre le dispositif de dépôt d'engrais (22) et le dispositif de dépôt de semences (34) ; et/ou
- commander un entraînement de positionnement permettant de modifier la position de l'ouverture de distribution de semences (40) et/ou l'orientation de la conduite de dépôt de semences (38) en fonction de la relation de position entre le dispositif de dépôt d'engrais (22) et le dispositif de dépôt de semences (34).

13. Procédé permettant de faire fonctionner une unité d'épandage (10) selon l'une des revendications précédentes,
**caractérisé par** l'étape consistant à :
- détecter une relation de position variable entre le dispositif de dépôt d'engrais (22) et le dispositif de dépôt de semences (34) par le biais d'un système de détection de position (52, 54, 56) ;
dans lequel un dispositif de commande (50) commande
- le fonctionnement d'un dispositif de dosage d'engrais, réalisé sous forme de dispositif de portionnement d'engrais, de l'unité d'épandage (10), lequel dispositif de dosage d'engrais est conçu pour portionner l'engrais à déposer,
et/ou
- le fonctionnement d'un dispositif de dosage de semences (44), réalisé sous forme de dispositif de séparation de graines de semences, de l'unité d'épandage (10), lequel dispositif de dosage de semences est conçu pour séparer les semences à déposer,
en fonction de la relation de position détectée entre le dispositif de dépôt d'engrais (22) et le dispositif de dépôt de semences (34).

14. Procédé selon la revendication 13,
**caractérisé en ce que** le dispositif de commande (50) commande
- un entraînement de positionnement de l'unité d'épandage (10) permettant de modifier la position d'une ouverture de distribution d'engrais (28) de l'unité d'épandage (10) et/ou l'orientation d'une conduite de dépôt d'engrais (26) de l'unité d'épandage (10) ; et/ou
- un entraînement de positionnement de l'unité d'épandage (10) permettant de modifier la position d'une ouverture de distribution de semences (40) de l'unité d'épandage (10) et/ou l'orientation d'une conduite de dépôt de semences (38) de l'unité d'épandage (10)
en fonction de la relation de position détectée entre le dispositif de dépôt d'engrais (22) et le dispositif de dépôt de semences (34).
